# EUROPEAN PATENT APPLICATION

(11) **EP 3 484 191 A1**
(43) Date of publication of application: **15.05.2019**
(21) Application number: 17839378.1
(22) Date of filing: 04.08.2017
(51) Int. Cl.: H04W 4/02, H04W 72/04

(54) **COMMUNICATIONS DEVICE**

(30) Priority: 12.08.2016 JP 2016158418
(71) Applicant: Kyocera Corporation, Kyoto-shi, Kyoto 612-8501 (JP)
(72) Inventor: FUJISHIRO, Masato, Kyoto-shi Kyoto 612-8501 (JP); SAIWAI, Takahiro, Kyoto-shi Kyoto 612-8501 (JP); YAMAZAKI, Chiharu, Kyoto-shi Kyoto 612-8501 (JP); KOMURA, Mayumi, Kyoto-shi Kyoto 612-8501 (JP)
(74) Representative: Viering, Jentschura & Partner mbB Patent- und Rechtsanwälte
(86) International application number: PCT/JP2017/028455
(87) International publication number: WO 2018/030307

(57) **Abstract**

A communication device according to one embodiment includes a receiver configured to receive a first message from a first cell, and a controller configured to determine, based on the first message, which of first configuration information and second configuration information to apply to calculate a zone that is a geographical section. The first configuration information is information pre-configured in the communication device. The second configuration information is information provided from the first cell. The controller is configured to calculate a zone in which the communication device is located based on one piece of configuration information determined from the first configuration information and the second configuration information, and perform Vehicle-to-Everything (V2X) communication based on a resource pool associated with the calculated zone.

## Description

### TECHNICAL FIELD

The present disclosure relates to a communication device.

### BACKGROUND ART

In 3GPP (3rd Generation Partnership Project) which is a project aiming to standardize a mobile communication system, specifications for direct signaling (Sidelink) between devices are being formulated (see Non Patent Document 1).

### PRIOR ART DOCUMENT

### NON-PATENT DOCUMENT

Non Patent Document 1: 3GPP Technical Specification "TS 36.300 V13.4.0", July 7, 2016

### SUMMARY OF THE INVENTION

A communication device according to one embodiment comprises: a receiver configured to receive a first message from a first cell; and a controller configured to determine, based on the first message, which of first configuration information and second configuration information to apply to calculate a zone that is a geographical section. The first configuration information is information configured in advance for the communication device. The second configuration information is information provided from the first cell. The controller is configured to: calculate a zone in which the communication device is located based on one piece of configuration information determined from the first configuration information and the second configuration information; and perform Vehicle-to-Everything (V2X) communication based on a resource pool associated with the calculated zone.

### BRIEF DESCRIPTION OF THE DRAWINGS

Fig. 1 is a diagram illustrating a configuration of an LTE system.
Fig. 2 is a protocol stack diagram of a radio interface in the LTE system.
Fig. 3 is a configuration diagram of a radio frame used in the LTE system.
Fig. 4 is a diagram for describing an example of a zone.
Fig. 5 is a block diagram of a UE 100.
Fig. 6 is a block diagram of an eNB 200.
Fig. 7 is a sequence chart for describing an operation pattern 1.
Fig. 8 is a sequence chart for describing an operation pattern 2.
Fig. 9 is a sequence chart for describing an operation pattern 3.
Fig. 10 is a flowchart for describing an operation pattern 4.

### DESCRIPTION OF THE EMBODIMENT

### [Overview of Embodiments]

A communication device according to one embodiment comprises: a receiver configured to receive a first message from a first cell; and a controller configured to determine, based on the first message, which of first configuration information and second configuration information to apply to calculate a zone that is a geographical section. The first configuration information is information configured in advance for the communication device. The second configuration information is information provided from the first cell. The controller is configured to: calculate a zone in which the communication device is located based on one piece of configuration information determined from the first configuration information and the second configuration information; and perform Vehicle-to-Everything (V2X) communication based on a resource pool associated with the calculated zone.

The first message may include resource information indicating the resource pool. The controller may be configured to perform the V2X communication based on the resource pool indicated by the resource information.

The second configuration information may include information used for the V2X communication in a second cell adjacent to the first cell. The controller may be configured to perform the V2X communication based on the information.

The controller may be configured to perform the V2X communication using an exceptional resource pool that is not associated with the zone, in accordance with a change of configuration information to be applied to the communication device.

A processor according to one embodiment is a processor for controlling a communication device. The processor executes: a process of receiving a first message from a first cell; and a process of determining, based on the first message, which of first configuration information and second configuration information to apply to calculate a zone that is a geographical section. The first configuration information is information configured in advance for the communication device. The second configuration information is information provided from the first cell. The processor further executes: a process of calculating a zone in which the communication device is located based on one piece of configuration information determined from the first configuration information and the second configuration information; and a process of performing Vehicle-to-Everything (V2X) communication based on a resource pool associated with the calculated zone.

A communication device according to one embodiment comprises: a receiver configured to receive a first message from a first cell; and a controller configured to determine, based on the first message, which of first configuration information and second configuration information to apply to calculate a zone that is a geographical section. The first configuration information is information configured in advance for the communication device. The second configuration information is information provided from the first cell.

The first message may include first information indicating that application of the first setting information is permitted. The controller may be configured to decide to apply the first configuration information.

The first information may include information for identifying first configuration information to be applied, among a plurality of pieces of first configuration information.

The first configuration information may include first resource information indicating a resource pool associated with the zone. The first message may include information indicating application of second resource information provided from the first cell.

The controller may be configured to apply the first configuration information until at least one of the first message and the second setting information is received.

The first message may include second information indicating that application of the first configuration information is not permitted. The controller may be configured to determine to apply the second configuration information based on the second information.

The receiver may be further configured to receive a second message from the second cell. The controller determines which one of the first configuration information and third configuration information is applied to calculate the zone in the second cell based on the second message. The third configuration information may be information provided from the second cell. The communication device may further comprise a transmitter configured to transmit a message for notifying configuration information applied in the second cell to the first cell.

The third message may include information for indicating whether the configuration information applied in the second cell is the same as the configuration information applied in the first cell.

The third message may include the third setting information.

A communication device according to one embodiment comprises a transmitter configured to transmit first configuration information used for direct device-to-device communication to a base station. The first configuration information is pre-configured in the communication apparatus and is at least one of zone configuration information for calculating a zone which is a geographical section and resource configuration information indicating a resource pool associated with the zone.

The communication device may further comprise a receiver configured to receive a message from the base station for the communication device to transmit the first configuration information to the base station. The transmitter may be configured to transmit the first configuration information based on the third message.

The communication device may further comprise a controller configured to select the first configuration information from among a plurality of pieces of first configuration information used for direct device-to-device communication. The transmitter may be configured to transmit the first configuration information selected by the controller to the base station.

The transmitter may be configured to transmit the first configuration information in response to the application of the first configuration information.

The transmitter may be configured to transmit the first configuration information as information indicating the capability of the communication device.

A communication device according to one embodiment comprises a controller and a transmitter. The controller is configured to specify a first zone which is a geographical section where the communication device is located and to select a first transmission resource region associated with the first zone. The transmitter is configured to transmit a direct radio signal to another communication device using the resources in the first transmission resource region. The controller is configured to, when changing from the first zone to a second zone different from the first zone, select a predetermined transmission resource region different from a second transmission resource region until the second transmission resource region associated with the second zone is selected.

The controller may be configured to select a special transmission resource region not associated with a zone as the predetermined transmission resource region.

The controller may be configured to select the first transmission resource region as the predetermined transmission resource region.

The controller may select the second transmission resource region for a period in which the predetermined transmission resource region can be selected.

The controller may be configured to perform a measurement of a radio signal in the second transmission resource region during the period.

### [Embodiments]

### (Mobile Communication System)

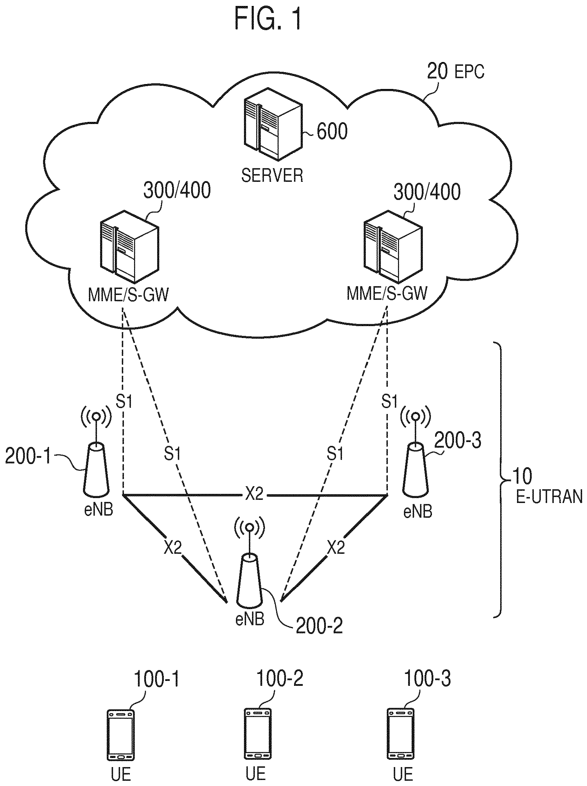

Hereinafter, an LTE system which is a mobile communication system according to the embodiments will be described. Fig. 1 is a diagram illustrating a configuration of an LTE system.

As illustrated in Fig. 1, the LTE system includes UE (User Equipment) 100, Evolved Universal Terrestrial Radio Access Network (E-UTRAN) 10, and Evolved Packet Core (EPC) 20.

The UE 100 corresponds to a communication apparatus (for example, a radio terminal). The UE 100 is a mobile communication apparatus. The UE 100 may be a vehicle (VUE (Vehicle UE) 100) having a communication function. The UE 100 may be the vehicle itself (e.g., a car, a motorcycle, etc.). The UE 100 may be a communication module detachable from the vehicle.

The UE 100 performs radio communication (Uplink/Downlink) with a cell (eNB 200 to be described later). UE 100 may be able to perform direct signaling transmission and/or reception with other communication apparatuses. For example, the UE 100 may be able to perform V2X (Vehicle-to-Everything) communication (e.g., V2V: Vehicle-to-Vehicle), road-to-vehicle communication (V2I: Vehicle-to-Infrastructure).

The E-UTRAN 10 corresponds to a radio access network. The E-UTRAN 10 includes eNBs (evolved Node-Bs) 200. The eNBs 200 correspond to base stations. The eNBs 200 are connected to each other via an X2 interface. The operation of the eNB 200 may be regarded as the operation of the E-UTRAN 10.

The eNB 200 manages one or a plurality of cells. The eNB 200 performs radio communication with the UE 100 that establishes a connection with a cell managed by the eNB 200. The eNB 200 has a radio resource management (RRM) function, a routing function of user data (hereinafter may be referred to as "data"), a measurement control function for mobility control / scheduling, and the like. "Cell" is used as a term indicating the minimum unit of radio communication area. The "cell" may also be used as a term indicating a function of performing radio communication with the UE 100.

The EPC 20 corresponds to a core network. The EPC 20 may constitute a network together with the E-UTRAN 10. The EPC 20 includes an MME (Mobility Management Entity) 300 and an SGW (Serving-Gateway) 400.

The MME 300 is, for example, configured to perform various types of mobility control for the UE 100. The SGW 400 is, for example, configured to perform transfer control of data. The MME 300 and the SGW 400 are connected to the eNB 200 via an S1 interface.

The EPC 20 may include a Server 600. The Server 600 may be, for example, a ProSe server that manages the ProSe function. The Server 600 may be a V2X server that manages the V2X (V2V/V2I) function. The Server 600 may be provided in the external network, not in the EPC 20.

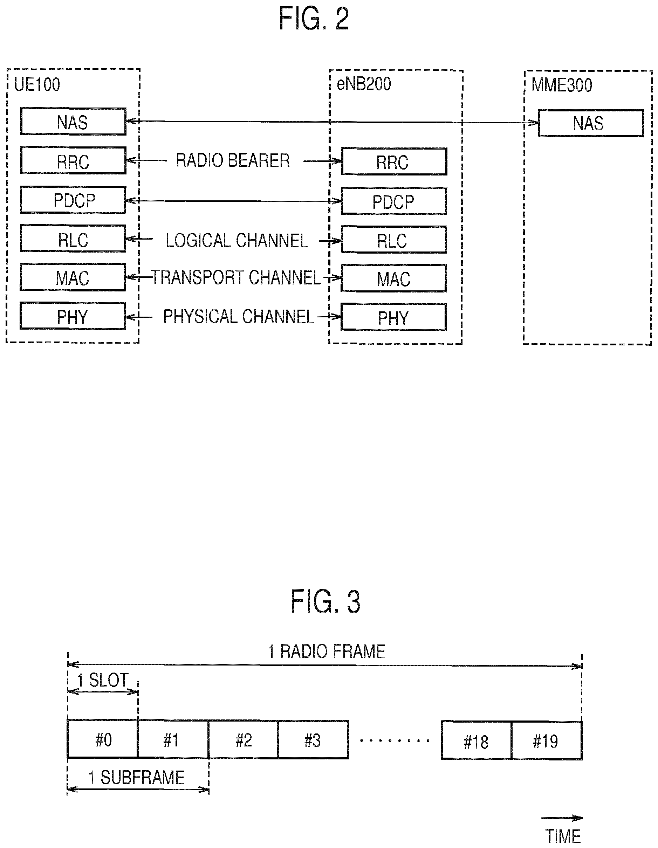

Fig. 2 is a diagram illustrating a protocol stack of a radio interface in the LTE system. As illustrated in Fig. 2, the radio interface protocol is divided into the first layer to the third layer of the OSI reference model. The first layer is a physical (PHY) layer. The second layer includes a MAC (Medium Access Control) layer, an RLC (Radio Link Control) layer, and a PDCP (Packet Data Convergence Protocol) layer. The third layer includes an RRC (Radio Resource Control) layer.

The physical layer performs coding/decoding, modulation/emodulation, antenna mapping/demapping, resource mapping/demapping. Between the physical layer of the UE 100 and the physical layer of the eNB 200, data and control signals are transmitted via the physical channel.

The MAC layer performs priority control of data, retransmission processing by Hybrid ARQ (HARQ), random access procedure, and the like. Between the MAC layer of the UE 100 and the MAC layer of the eNB 200, data and control signals are transmitted via the transport channel. The MAC layer of the eNB 200 includes a scheduler (MAC scheduler). The scheduler determines transport formats (transport block size, modulation and coding scheme (MCS)) of uplink and downlink and allocated resource blocks to UE 100.

The RLC layer uses the functions of the MAC layer and the physical layer to transmit data to the RLC layer on the receiving side. Between the RLC layer of the UE 100 and the RLC layer of the eNB 200, data and control signals are transmitted via logical channels.

The PDCP layer carries out header compression/decompression, encryption / decryption.

The RRC layer is defined only in the control plane handling the control signal. Messages (RRC messages) for various settings is transmitted between the RRC layer of the UE 100 and the RRC layer of the eNB 200. The RRC layer controls logical channels, transport channels, and physical channels in response to establishment, re-establishment and release of radio bearers. If there is an RRC connection between the RRC of the UE 100 and the RRC of the eNB 200, the UE 100 is in the RRC connected state. If there is no RRC connection between the RRC of the UE 100 and the RRC of the eNB 200, the UE 100 is in the RRC idle state.

The NAS (Non-Access Stratum) layer located above the RRC layer performs, for example, session management and mobility management.

Fig. 3 is a diagram illustrating a configuration of a radio frame of the LTE system. In the LTE system, OFDMA (Orthogonal Frequency Division Multiple Access) is applied to the downlink. SC-FDMA (Single Carrier Frequency Division Multiple Access) is applied to the uplink.

As shown in Fig. 3, the radio frame is composed of ten subframes arranged in the time direction. Each subframe is composed of two slots aligned in the time direction. The length of each subframe is 1 ms. The length of each slot is 0.5 ms. Each subframe includes a plurality of resource blocks (RBs) in the frequency direction. Each subframe includes a plurality of symbols in the time direction. Each resource block includes a plurality of subcarriers in the frequency direction. One resource element (RE: Resource Element) is composed of one symbol and one subcarrier. A radio resource (time/frequency resource) is allocated to the UE 100. In the frequency direction, radio resources (frequency resources) are configured by resource blocks. In the time direction, radio resources (time resources) are configured by subframes (or slots).

In the downlink, the section of the first several symbols of each subframe is an area that can be used as a physical downlink control channel (PDCCH) for transmitting a downlink control signal. The remaining part of each subframe is an area that can be used as a physical downlink shared channel (PDSCH) for transmitting downlink data.

In the uplink, both end portions in the frequency direction in each subframe are potions usable as a Physical Uplink Control Channel (PUCCH) for transmitting an uplink control signal. The remaining part of each subframe is an area that can be used as a physical uplink shared channel (PUSCH) for transmitting uplink data.

### (Proximity-based services)

Proximity-based services (ProSes) will be described. The proximity-based service is a service that can be provided by a 3GPP system, based on communication devices (for example, UEs 100) in the vicinity of each other.

In the ProSe, various types of radio signals are directly transmitted and received via a direct radio link between nodes (for example, between UEs), without passing through a network (for example, the eNB 200). The direct radio link in the ProSe is called "sidelink".

The sidelink may be an interface for sidelink communication and sidelink discovery (for example, an interface between a UE and a UE). The sidelink communication is a function (AS functionality) for enabling ProSe direct communication (hereinafter, appropriately referred to as "direct communication"). The sidelink discovery is a function (AS functionality) for enabling ProSe direct discovery (hereinafter, appropriately referred to as "direct discovery").

The sidelink corresponds to a PC5 interface. The PC5 is a reference point between ProSe-enabled UEs used for a control plane and a user plane for the ProSe direct discovery, the ProSe direct communication, and a ProSe UE-Network relay.

Defined modes of the ProSe include "Direct discovery", "Direct communication", and "Relay" modes. "Relay" will be described later.

The direct discovery may be, for example, a mode of searching for a destination by directly transmitting, between UEs, a discovery message (discovery signal) that does not specify a specific destination. The direct discovery may be a procedure for discovering another UE in the vicinity of a UE by using a direct radio signal in E-UTRA (Evolved Universal Terrestrial Radio Access) via the PC5. The direct discovery may be a procedure to be adopted by a UE 100 capable of executing the proximity-based service for discovering another UE 100 capable of executing the proximity-based service by using only a capability of the two UEs 100 with the help of the E-UTRA technology. The direct discovery may be supported only if the service is provided to the UE 100 by the E-UTRAN (eNB 200 (cell)). The service may be provided by the E-UTRAN if the UE 100 is either connected to the cell (eNB 200) or exits in the cell.

A resource allocation type for the transmission (announcement) of the discovery message (discovery signal) includes "Type 1" and "Type 2 (Type 2B)". In the "Type 1", the UE 100 selects a radio resource. In the "Type 2 (Type 2B)", the eNB 200 allocates a radio resource. In the Type 1, the UE 100 may select the radio resource from a resource pool provided by the eNB 200.

A "Sidelink Direct Discovery" protocol stack includes a physical (PHY) layer, a MAC layer, and a ProSe protocol.

The direct communication may be, for example, a mode in which data is directly transmitted between UEs by specifying a specific destination (destination group). The direct communication may be communication between two or more UEs capable of executing the proximity-based services through user plane transmission in which the E-UTRA technology is employed via a path without passing through any network node.

The resource allocation types of the direct communication include "Mode 1" and "Mode 2". In the "Mode 1", the eNB 200 specifies a radio resource of the direct communication. In the "Mode 2", the UE 100 selects a radio resource of the direct communication. In the Mode 2, the UE 100 may select the radio resource from a resource pool provided by the eNB 200.

A protocol stack of the user plane in the sidelink communication (direct communication) in the PC5 includes a physical (PHY) layer, a MAC layer, an RLC layer, and a PDCP layer. A protocol stack of a control plane for a sidelink broadcast control channel (SBCCH) in the PC5 includes a physical (PHY) layer, a MAC layer, an RLC layer, and an RRC layer. A protocol stack of the control plane for one-to-one sidelink communication includes a physical (PHY) layer, a MAC layer, an RLC layer, a PDCP layer, and a PC5 signaling protocol.

In the sidelink, various types of information are transmitted by using the following channels.

Physical channels for the sidelink include Physical Sidelink Broadcast Channel (PSBCH), Physical Sidelink Discovery Channel (PSDCH), Physical Sidelink Control Channel (PSCCH), and Physical Sidelink Shared Channel (PSSCH).

The PSBCH is a channel for transmitting information related to a system and synchronization (for example, synchronization signal). The PSDCH is a channel for transmitting a sidelink discovery message (discovery signal) from a UE. The PSCCH is a channel for transmitting control information from a UE for sidelink communication. The PSSCH is a channel for transmitting data from a UE for sidelink communication.

Transport channels for the sidelink include Sidelink Broadcast Channel (SL-BCH), Sidelink Discovery Channel (SL-DCH), and Sidelink Shared Channel (SL-SCH). The SL-BCH is mapped to the PSBCH. The SL-DCH is mapped to the PSDCH. The SL-SCH is mapped to the PSSCH.

Logical channels (control channel, traffic channel) for the sidelink include Sidelink Broadcast Control Channel (SBCCH) and Sidelink Traffic Channel (STCH).

The SBCCH is a sidelink channel for broadcasting sidelink system information from one UE to another UE or other UEs. The STCH is a point-to-multipoint channel for transferring user information (data) from one UE to another UE or other UEs. The STCH is used only in UEs capable of sidelink communication. The STCH may be used for point-to-point communication between two UEs capable of sidelink communication. The STCH is mapped to the SL-SCH. The SBCCH is mapped to the SL-BCH.

### (Zone concept)

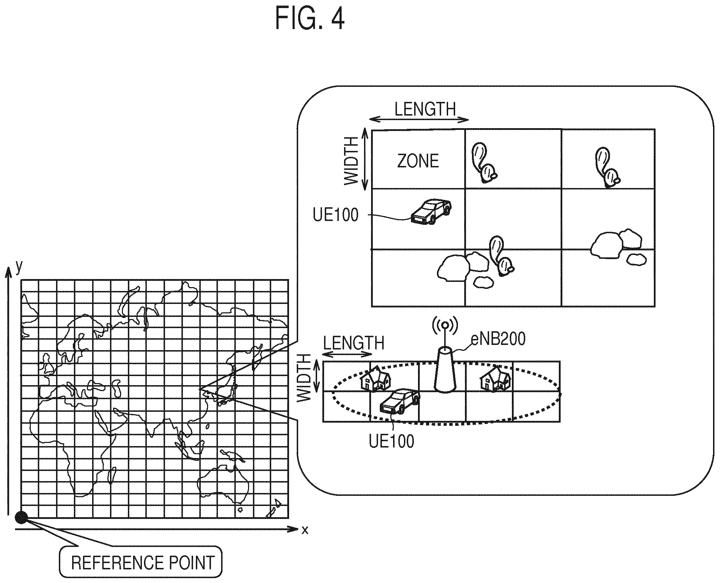

A zone concept will be described with reference to Fig. 4. Fig. 4 is a diagram for describing an example of a zone.

In the zone concept, the world is divided into geographical zones, as illustrated in Fig. 4. A UE 100 that is in coverage receives information (zone definition information) for defining a zone (zone identification information) from the eNB 200. Pre-configured information (zone definition information) is applied to a UE 100 that is out-of-coverage. The zone definition information defines, for example, a length of the zone, a width of the zone, and a single fixed reference point.

The UE 100 determines the zone in which the UE 100 is located based on the zone definition information. That is, the UE 100 determines in which zone the UE 100 is located. The UE 100 can determine the zone by a modulo operation. The UE 100 can determine the zone by using a reference point (for example, (0, 0)).

The zone is different from a coverage of the cell. The cell corresponds to a reachable range of a radio signal of the eNB 200. The zone is, for example, a geographical section determined (defined) by a network (eNB 200 or the like).

### (Radio terminal)

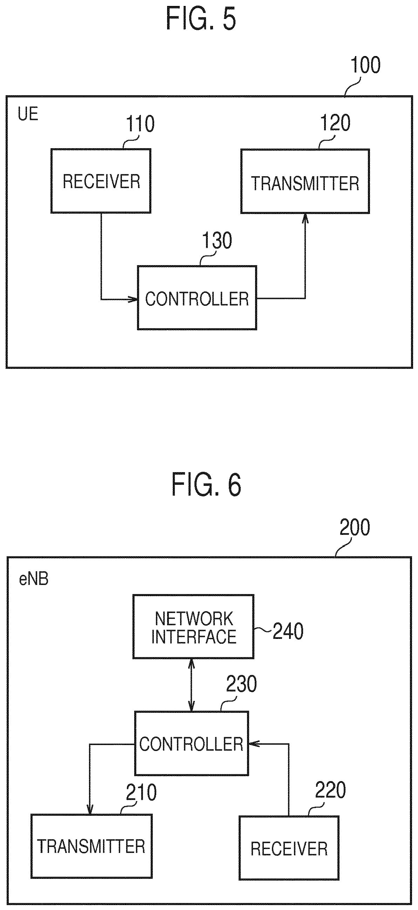

The UE 100 (radio terminal) according to embodiment will be described. Fig. 5 is a block diagram of the UE 100. As shown in Fig. 5, the UE 100 includes a receiver 110, a transmitter 120, and a controller 130. The receiver 110 and the transmitter 120 may be integrated transceivers.

The receiver 110 performs various types of reception under the control of the controller 130. Receiver 110 includes antennas. The receiver 110 converts a radio signal received by the antennas into a baseband signal (received signal). The receiver 110 outputs a baseband signal to the controller 130.

The transmitter 120 performs various transmissions under the control of the controller 130. The transmitter 120 includes antennas. The transmitter 120 converts a baseband signal (transmission signal) output from the controller 130 into a radio signal. The transmitter 120 transmits a radio signal from the antennas.

The controller 130 performs various controls in the UE 100. The controller 130 includes a processor and a memory. The memory stores programs executed by the processor and information used for processing by the processor. The processor includes a baseband processor and a CPU (Central Processing Unit). The baseband processor performs, for example, modulation/demodulation and encoding/decoding of a baseband signal. The CPU executes various processes by executing a program stored in the memory. The processor may include a codec for encoding/decoding audio/video signals. The processor executes various processes to be described later and the above-described various communication protocols.

The UE 100 may include a Global Navigation Satellite System (GNSS) receiver. The GNSS receiver can receive a GNSS signal to obtain location information indicating a geographical location of the UE 100. The GNSS receiver outputs the GNSS signal to the controller 130. The UE 100 may have a GPS (Global Positioning System) function for acquiring the position information of the UE 100. The UE 100 may have a function of position predicting such as an electronic compass, an acceleration sensor, and the like. The location information may be geo-location information.

The UE 100 is a communication apparatus having a function capable of executing transmission and/or reception of direct signaling with another communication apparatus. Therefore, it goes without saying that the UE 100 may have other configurations (for example, functions, members, etc.).

In the present specification, processes performed by at least one of the receiver 110, the transmitter 120, and the controller 130 of the UE 100 will be described as processes (operations) executed by the UE 100 for the sake of convenience.

### (Base Station)

The eNB 200 (base station) according to each embodiment will be described. Fig. 6 is a block diagram of the eNB 200. As shown in Fig. 6, the eNB 200 includes a receiver 210, a transmitter 220, a controller 230, and a network interface 240. The receiver 210 and the transmitter 220 may be an integrated transceiver.

The receiver 210 performs various types of reception under the control of the controller 230. Receiver 210 includes antennas. The receiver 210 converts a radio signal received by the antennas into a baseband signal (received signal). The receiver 210 outputs a baseband signal to the controller 230.

The transmitter 220 performs various transmissions under the control of the controller 230. The transmitter 220 includes antennas. The transmitter 220 converts the baseband signal (transmission signal) output from the controller 230 into a radio signal. The transmitter 220 transmits a radio signal from antennas.

The controller 230 performs various controls in the eNB 200. The controller 230 includes a processor and a memory. The memory stores programs executed by the processor and information used for processing by the processor. The processor includes a baseband processor and a CPU. The baseband processor performs modulation/demodulation, encoding/decoding, etc. of the baseband signal, for example. The CPU executes various processes by executing a program stored in the memory. The processor executes various processes to be described later and the above-described various communication protocols.

The network interface 240 is connected to the neighboring eNB 200 via the X2 interface. The network interface 240 is connected to the MME 300 and the SGW 400 via the S1 interface. For example, the network interface 240 is used for communication performed on the X2 interface and communication performed on the S 1 interface.

In the present specification, processing performed by at least one of the receiver 210, the transmitter 220, the controller 230, and the network interface 240 of the eNB 200 will be described as a process (operation) executed by the eNB 200 for convenience.

### (Operation according to embodiment)

An operation according to the embodiment will be described with reference to the following operation patterns 1 to 4.

### (A) Operation pattern 1

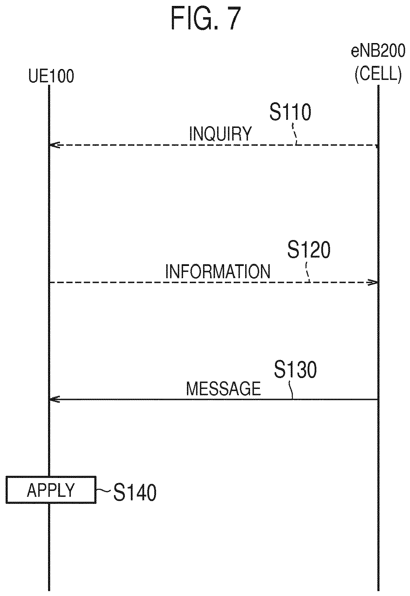

The operation pattern 1 will be described with reference to Fig. 7. Fig. 7 is a sequence chart for describing the operation pattern 1.

In Fig. 7, the UE 100 may be located in (exist in) a cell (PCell (Primary Cell)/serving cell/camp cell) managed by the eNB 200. The UE 100 may have established an RRC connection with the eNB 200 (cell) (may be in an RRC connected state). The UE 100 may not have established the RRC connection (may be in an RRC idle state). The UE 100 may establish an RRC connection with the eNB 200 if transmitting a radio signal to the eNB 200.

As illustrated in Fig. 7, in step S110, the eNB 200 (cell) may transmit an inquiry message (inquiry) to the UE 100.

The inquiry message is a message for causing the UE 100 to transmit (report) UE configuration information to the eNB 200. The UE configuration information is configuration information pre-configured in the UE 100. The inquiry message may be a message for requesting the UE 100 to transmit the UE configuration information. The inquiry message may include information for configuring the transmission (report) of the UE configuration information in the UE 100.

The UE configuration information is configuration information used for direct device-to-device communication (such as V2V communication and V2X communication). The UE configuration information is at least one of zone configuration information (zone definition information) for calculating a zone and resource configuration information indicating a resource pool associated with the zone. The UE configuration information may be stored (configured) in the SIM (Subscriber Identity Module Card) of the UE 100. The SIM may be a UIM (User Identity Module Card) or a USIM (Universal Subscriber Identity Module Card).

The inquiry message may include designation information for designating information to be transmitted. The designation information may designate the zone configuration information as the UE configuration information to be transmitted. The designation information may designate the resource configuration information. The designation information may designate both the zone configuration information and the resource configuration information.

If the UE configuration information differs for each area (such as country and region), the UE 100 may be pre-configured with a plurality of pieces of UE configuration information (a plurality of sets). The designation information may designate all pieces of UE configuration information. The designation information may designate only the UE configuration information associated with the area where the UE 100 is currently located. The designation information may include an area identifier.

In step S120, the UE 100 may transmit the UE configuration information to the eNB 200.

The UE 100 may transmit applicable UE configuration information to eNB 200. The UE 100 may omit transmission of inapplicable UE configuration information. For example, the UE 100 may select, from the plurality of pieces of UE configuration information, UE configuration information applicable in an area where the UE 100 is currently located. The UE 100 may transmit only the selected UE configuration information to the eNB 200. If the UE 100 does not have applicable UE configuration information, the UE 100 may omit transmission. The UE 100 may transmit, to the eNB 200, a message in which a field to store the UE configuration information is blank.

The UE 100 may transmit the UE configuration information to the eNB 200 as information indicating a capability of the UE 100. The UE 100 may include the UE configuration information in a message for notifying the capability of the UE 100 to a network (eNB 200 or the like). The UE 100 may transmit the UE configuration information to the eNB 200 by transmitting the message.

The UE 100 may notify a parameter as the UE configuration information. The UE 100 may transmit parameters such as a length (L) of the zone, a width (W) of the zone, and a reference point to the eNB 200. The UE 100 may transmit the UE configuration information to the eNB 200 in a logical type (Boolean type: true/false) format.

The UE 100 may transmit the UE configuration information based on the inquiry message. The UE 100 may transmit the UE configuration information only if receiving the inquiry message. The UE 100 may transmit all of the plurality of pieces of UE configuration information. The UE 100 may transmit (from the plurality of pieces of UE configuration information) the UE configuration information designated by the designation information.

In step S130, the eNB 200 (cell) transmits a message. The UE 100 receives the message. The message is used for the UE 100 to determine the configuration information to be applied for calculating the zone.

The eNB 200 may transmit the message to a UE 100 by dedicated signaling (such as an RRC reconfiguration message and DCI (Downlink Control Information)) and/or broadcast signaling (for example, SIB: System Information Block (such as SIB 21)).

The message may include information (an indicator) indicating that application of the UE configuration information is permitted. The message may include information (an indicator) indicating that application of the UE configuration information is not permitted. The message may include information (an indicator) indicating that application of cell configuration information is permitted. The message may include information (an indicator) indicating that application of the cell configuration information is not permitted.

The cell configuration information is information used for direct device-to-device communication (such as V2V communication and V2X communication). The cell configuration information is information provided (transmitted) from the eNB 200 (cell). That is, the cell configuration information is at least one of zone configuration information (zone definition information) provided by the eNB 200 and resource configuration information provided by the eNB 200. The cell configuration information may be included in the message mentioned above. The cell configuration information may be included in a message (such as SIB and dedicated signaling) different from the message mentioned above.

The information indicating that the application of the UE configuration information is permitted may include information (such as an identification ID) for identifying the UE configuration information to be applied, from the plurality of pieces of UE configuration information.

The indicator may include, instead of resource configuration information (first resource information) pre-configured in the UE 100, information (for example, ENUM {true}) designating the application of resource configuration information (second resource information) provided from the cell. If the information is not included, the UE 100 may determine to apply the first resource information.

The message may include first information indicating zone configuration information to be applied and second information indicating resource configuration information to be applied. The first information may indicate zone configuration information (first zone information) pre-configured in the UE as the zone configuration information to be applied. The first information may indicate the zone configuration information (second zone information) provided from the eNB 200 (cell) as the zone configuration information to be applied. The second information may indicate resource configuration information (first resource information) pre-configured in the UE as the resource configuration information to be applied. The second information may indicate resource configuration information (second resource information) provided from the eNB 200 (cell) as the resource configuration information to be applied.

The message may include information (a list) indicating a correspondence relationship between zone identification information (such as a ZoneID) and resource identification information (such as a resource ID). This information may be included in the resource configuration information provided from the eNB 200 (cell).

The eNB 200 may determine the content of the message based on the UE configuration information received from the UE 100 in step S120.

In step S140, the UE 100 applies the configuration information to calculate the zone. Based on the message in step S130, the UE 100 determines which of the UE configuration information and the cell configuration information is to be applied for calculating the zone.

The UE 100 may determine to apply the UE configuration information according to, for example, information indicating that application of the UE configuration information is permitted (or information indicating that the application of the cell configuration information is not permitted). The UE 100 may determine to apply the cell configuration information according to, for example, information indicating that application of the UE configuration information is not permitted (or information indicating that the application of the cell configuration information is permitted).

If the UE 100 has a plurality of pieces of UE configuration information, the UE 100 may determine to apply an initial UE configuration information (for example, the first entry in a list). If the message does not include an identification ID for identifying the UE configuration information, the UE 100 may determine to apply the initial UE configuration information. If the message includes the identification ID for identifying the UE configuration information, the UE 100 may determine to apply the UE configuration information indicated by the identification ID.

The UE 100 may determine which of the first zone information and the second zone information is to be applied based on the first information indicating the zone configuration information to be applied.

The UE 100 may determine which of the first resource information and the second resource information is to be applied based on the second information indicating the resource configuration information to be applied. The UE 100 may apply the second resource information (that is, the resource configuration information provided from the cell), even if applying the first zone information (that is, the zone configuration information pre-configured in the UE 100). In this case, the UE 100 may associate the zone identification information (Zone ID) included in the first zone information with the resource identification information (resource ID) included in the second resource information. The UE 100 may grasp a correspondence relationship based on information indicating the correspondence relationship between the zone identification information (Zone ID) and the resource identification information (resource ID).

The UE 100 may apply the first resource information (that is, the resource configuration information pre-configured in the UE 100), even if applying the second zone information (that is, the zone configuration information provided from the cell).

If the UE 100 can not confirm the existence of the message in step S130 (that is, not receive the message), the UE 100 may determine to apply the UE configuration information. The UE 100 may determine to apply the UE configuration information until receiving at least one of the message and the cell configuration information in step S130. Thus, the UE 100 may determine to apply the UE configuration information if the UE 100 can not receive, from the eNB 200, explicit signaling about the application of the cell configuration information. In this case, the UE 100 may determine to apply the UE configuration information only if operation of direct device-to-device communication (such as V2V communication and V2X communication) is permitted. Even if the UE 100 can not receive explicit signaling from the eNB 200, the UE 100 may determine not to apply the UE configuration information if operation of the V2V communication is not permitted. The eNB 200 may transmit, by broadcast signaling, information indicating permission (or non-permission) of the operation of direct device-to-device communication (such as V2V communication and V2X communication).

The UE 100 applies the determined configuration information. For example, the UE 100 may read the UE configuration information stored in the USIM, in accordance with determining to apply the UE configuration information. The UE 100 may apply the read UE configuration information.

In accordance with determining to apply the cell configuration information, the UE 100 may apply the cell configuration information provided from the cell.

If applying the UE configuration information, the UE 100 may exclude the application of the cell configuration information if holding the cell configuration information. The UE 100 may discard the cell configuration information. The UE 100 may store the cell configuration information in the memory. If determining to apply the cell configuration information, the UE 100 may read the cell configuration information from the memory.

The UE 100 performs transmission of a direct radio signal to another UE, according to the applied configuration information. Based on the applied zone configuration information and location information indicating the location of the UE 100, the UE 100 calculates (identifies) the zone in which the UE 100 is located. For example, the UE 100 may identify (calculate) the entire zone based on the configuration information (zone definition information). After calculating the entire zone, the UE 100 may identify the zone based on the location information of the UE 100. The UE 100 may identify the zone by inputting a parameter indicating the location of the UE 100 into an expression indicated by the zone definition information. The UE 100 may identify the zone if performing transmission and/or reception of a direct radio signal between devices (such as V2V communication and V2X communication).

The UE 100 selects a transmission resource pool corresponding to the identified zone based on the applied resource configuration information. The UE 100 may select the transmission resource pool based on information (for example, the list mentioned above) indicating the correspondence relationship between the zone and the transmission resource pool. The UE 100 performs measurement (sensing) of a radio signal in the selected transmission resource pool. The UE 100 performs sensing on the selected transmission resource pool. The UE 100 may perform sensing on at least one of a control region and a data region in the transmission resource pool. The control region is a region (for example, PSCCH) where control information used for device-to-device communication is arranged. The control information includes information indicating a location where data information is arranged. The data region is a region (for example, PSSCH) where data information used for device-to-device communication is arranged.

The UE 100 measures, for example, a reception level (reception strength (RSRP: Reference Signal Received Power), a reception quality (RSRQ: Reference Signal Received Quality), and the like) of a radio signal in the transmission resource pool.

The UE 100 may select the transmission resource pool according to the sensing result (measurement result). For example, the UE 100 decodes the control information and identifies a resource (time/frequency resource) where no data is arranged. The UE 100 uses a resource in the control region in the selected transmission resource pool to transmit, by direct device-to-device communication, control information indicating a location of the identified resource. The UE 100 uses the identified resource to transmit the transmission data by direct device-to-device communication. In this manner, the UE 100 can transmit a direct radio signal (control information and transmission data) to another UE.

As described above, the eNB 200 can appropriately control the configuration information to be applied by the UE 100. The eNB 200 can cause the UE 100 to apply the UE configuration information, even if the UE 100 is located in in-coverage (that is, within the coverage). Thus, even if the UE 100 alternately transits between an in-coverage state and an out-of-coverage (outside the coverage) state, as moving near a cell edge, the UE 100 can calculate the zone according to the same configuration information (that is, the UE configuration information). The range of the zone does not depend on the shape of the cell, and thus, a zone configuration common with a neighbour cell can be applied if the UE configuration information is applied. Therefore, the UE 100 can calculate the zone without separating the zones according to the cell end (cell edge). If the UE configuration information is applied, the eNB 200 does not need to manage the cell configuration information, and thus, a load of the eNB 200 can also be reduced. A load of the signaling between the UE and the eNB (radio load) can also be reduced.

### (B) Operation pattern 2

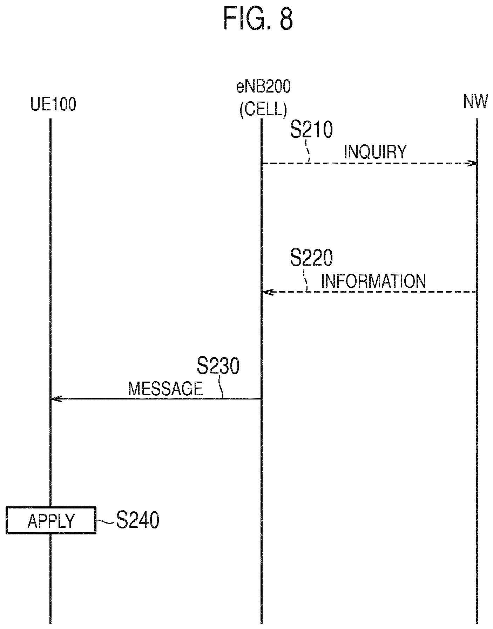

The operation pattern 2 will be described with reference to Fig. 8. Fig. 8 is a sequence chart for describing the operation pattern 2. The description of content similar to the content described above will be omitted.

In the operation pattern 2, the eNB 200 receives UE configuration information from an NW. An operation environment is similar to that of the operation pattern 1.

As illustrated in Fig. 8, in step S210, the eNB 200 may transmit an inquiry message (inquiry) to the NW (network). The inquiry message is a message for requesting the UE configuration information.

The inquiry message may include an identifier (UE ID) of the UE 100. The identifier of the UE 100 may be an IMSI (International Mobile Subscriber Identity).

The NW may be, for example, a node (network device) in a core network. The NW may be the MME 300, an HSS (Home Subscriber Server), and an OAM (Operations And Management). The HSS is a node (NW device) configured to manage subscriber information of the UE 100. The OAM is an NW device managed by an operator. The OAM performs maintenance and monitoring of the E-UTRAN 10. The NW may be, for example, a Server 600 (node) configured to manage a V2X (V2V/V2I) function. The NW may be a Server 600 (node) configured to manage a ProSe function.

In step S220, the NW transmits the UE configuration information (information) to the eNB 200. The NW may transmit, to the eNB 200, UE configuration information corresponding to the identifier of the UE 100. The NW may transmit, to the eNB 200, UE configuration information set by the carrier. The eNB 200 receives the UE configuration information from the NW.

Step S230 corresponds to step S130. Step S240 corresponds to step S140.

As described above, the eNB 200 can acquire the UE configuration information without receiving the UE configuration information from the UE 100. Based on the UE configuration information, the eNB 200 can appropriately control the configuration information to be applied by the UE 100.

### (C) Operation pattern 3

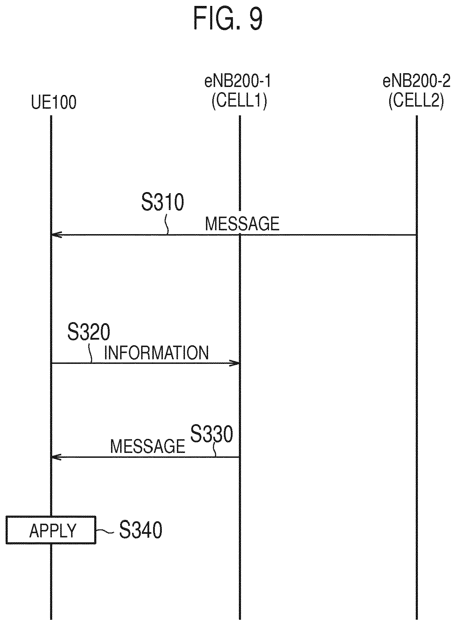

The operation pattern 3 will be described with reference to Fig. 9. Fig. 9 is a sequence chart for describing the operation pattern 3. The description of content similar to the content described above will be omitted.

In the operation pattern 3, an eNB 200-1 can determine the configuration information to be applied in consideration of neighbour cell configuration information provided by an eNB 200-2 that is a neighbour eNB.

In Fig. 9, the UE 100 is located (exists) in a cell 1 (PCell (Primary Cell)/serving cell/camp cell) managed by the eNB 200-1. The UE 100 may have established an RRC connection with the eNB 200-1 (cell 1) (may be in an RRC connected state). The UE 100 may not have established the RRC connection (may be in an RRC idle state). The UE 100 may establish the RRC connection with the eNB 200-1 if transmitting a radio signal to the eNB 200-1 (cell 1). The eNB 200-1 is a serving eNB for the UE 100.

The UE 100 is also located in (exists in) a cell 2 managed by the eNB 200-2. The UE 100 does not establish an RRC connection with the eNB 200-2 that is a neighbour eNB. The UE 100 is located in the cell 2 that is a neighbour cell, and thus, the UE 100 can receive a radio signal (such as a reference signal and SIB) from the eNB 200-2 (cell 2).

In step S310, the eNB 200-2 transmits a message. The UE 100 is located in the cell 2 and thus can receive the message. The UE 100 can receive the message without changing the serving cell (P cell). The UE 100 may receive the message in response to a request from the eNB 200-1.

The message is a message similar to the message in step S130. The message is applied (set) to a UE subordinate to the cell 2. Based on the message, the UE 100 can determine, similarly to the operation pattern 1, which of the UE configuration information and second cell configuration information is to be applied in the cell 2. The second cell configuration information is cell configuration information provided from the cell 2 (the eNB 200-2). The message may include the second cell configuration information.

In step S320, the UE 100 transmits, to the eNB 200-1 (cell 1), a message (information) for notifying the configuration information applied in the second cell. The eNB 200-1 receives a report message from the UE 100.

The message in step S320 (hereinafter, report message) may include information for indicating whether the configuration information to be applied in the cell 2 is the same as the configuration information to be applied in the cell 1. For example, if the UE configuration information is applied in the cell 1 and the second cell configuration information is applied in the cell 2, the UE 100 may include, into the report message, an indication indicating that different pieces of configuration information are applied. If the UE configuration information is applied in the cell 1 and the UE configuration information is applied in the cell 2, the UE 100 may include, into the report message, an indication indicating that the same configuration information is applied. If first cell configuration information is applied in the cell 1 and the second cell configuration information is applied in the cell 2, the UE 100 may include, into the report message, an indication indicating that different pieces of configuration information are applied. If the first cell configuration information and the second cell configuration information are common, the UE 100 may include, into the report message, an indication indicating that the same configuration information is applied. If the first cell configuration information and the second cell configuration information are different from each other, the UE 100 may include, into the report message, an indication indicating that different pieces of configuration information are applied.

The UE 100 may include, in the report message, an indication indicating whether the same configuration information is applied to each of the zone configuration information and the resource configuration information.

The UE 100 may include, into the report message, the second cell configuration information. The UE 100 may only include, into the report message, the second cell configuration information, only if the first cell configuration information and the second cell configuration information are different. The UE 100 may include, into the report message, the second cell configuration information without including, into the report message, the indication.

The eNB 200-1 may receive the second cell configuration information from the eNB 200-2 via the X2 interface, for example. The eNB 200-1 may request the second cell configuration information from the eNB 200-2. The eNB 200-2 may transmit the second cell configuration information to the eNB 200-1, in response to the request from the eNB 200-1. In response to updating the second cell configuration information, the eNB 200-2 may transmit the second cell configuration information to the eNB 200-1.

The eNB 200-1 may receive, from the eNB 200-2 via the X2 interface for example, information (application information) for notifying the configuration information to be applied in the cell 2. The eNB 200-1 may request the application information from the eNB 200-2. The eNB 200-2 may transmit the application information to the eNB 200-1, in response to the request from the eNB 200-1. In response to updating the application information, the eNB 200-2 may transmit the application information to the eNB 200-1.

Based on the report message received from the UE 100 and/or the information received from the eNB 200-1 (the second cell configuration information and/or the application information), the eNB 200-1 may determine the configuration information to be applied in the cell of the eNB 200-1 (cell 1).

For example, the eNB 200-1 may determine to apply the same configuration information in the cell 1 as the configuration information applied in the cell 2 so that a zone does not frequently change at a boundary between the cell 1 and the cell 2. For example, if the zone does not frequently change at the boundary between the cell 1 and the cell 2, the eNB 200-1 may determine the configuration information according to a city and/or a road in the cell 1.

The eNB 200-1 may configure such that only one of the zone configuration information and the resource configuration information is the same as that in the cell 2. For example, the eNB 200-1 may configure only the same zone configuration information as that in the cell 2. The eNB 200-1 may configure the resource configuration information different from that in the cell 2.

Steps S330 and S340 correspond to steps S130 and S140.

The eNB 200-1 may transmit the second cell configuration information and/or the application information to the UE 100 by dedicated signaling (such as an RRC reconfiguration message and DCI) and/or broadcast signaling (such as SIB (SIB 21 and the like)). The eNB 200-1 may include, into a message in step S330, the second cell configuration information and/or the application information. The eNB 200-1 may include, into a message different from the message in step S330, the second cell configuration information and/or the application information to transmit the message. As a result, the UE 100 can acquire the second cell configuration information and/or the application information while existing in the cell 1. The UE 100 may not acquire the second cell configuration information and/or the application information after existing in the cell 2, and thus, the UE 100 can perform V2X communication without delay in the cell 2.

As described above, the eNB 200-1 can determine the configuration information to be applied in the cell of the eNB 200-1 in consideration of the configuration information to be applied in the neighbour cell. As a result, if the same configuration information is applied between the cells, the UE 100 can continue to select (use) the same transmission resource pool corresponding to the same zone, even if the cell has changed. That is, the UE 100 can use common configuration information between the cells. As a result, a process load from the calculation of zones, reselection of transmission resource pools, and the like, can be reduced and the occurrence of delay can be reduced.

### (D) Operation pattern 4

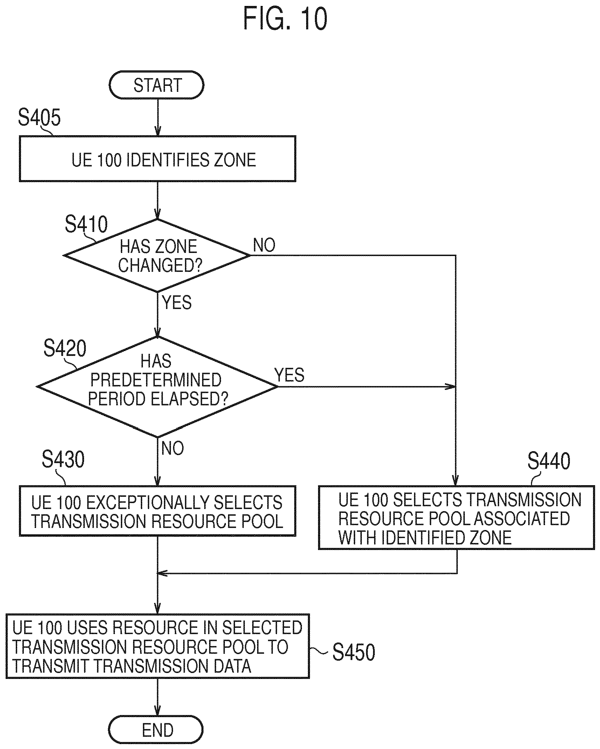

The operation pattern 4 will be described with reference to Fig. 10. Fig. 10 is a flowchart for describing the operation pattern 4. The description of content similar to the content described above will be omitted.

In the operation pattern 4, an operation of the UE 100 in a case that the zone has changed will be described.

In step S405, the UE 100 identifies a zone based on the configuration information. The UE 100 can identify the zone in a similar manner as in each of the above-described operation patterns. For example, the UE 100 can identify the zone based on the zone configuration information.

In step S410, the UE 100 determines whether or not the zone has changed. For example, the UE 100 may determine whether or not the zone identified in step S405 is the same as a previously identified zone. If the previously identified zone is the same as the zone identified this time, the UE 100 may determine that the configuration information has not changed. Otherwise, the UE 100 may determine that the configuration information has changed. Depending on the movement of the UE 100, the zone may change according to the different zones in which the UE 100 is located.

The UE 100 may determine that the zone has changed, if a parameter employed for identifying the zone was changed (for example, updated). For example, the UE 100 may determine that the zone has changed in accordance with detecting a switching of configuration information to be applied from the UE configuration information to the cell configuration information (or from the cell configuration information to the UE configuration information). If the cell configuration information is applied, the UE 100 may determine that the zone has changed in accordance with receiving updated cell configuration information from the eNB 200 (cell).

Even if the zone configuration information has not changed, the UE 100 may determine that the zone has changed, if the transmission resource pool associated with the identified zone has changed.

If the zone has changed, the UE 100 executes a process of step S420. If the zone has not changed, the UE 100 executes a process of step S440.

In step S420, the UE 100 may determine whether a predetermined period (gap period) has elapsed. The predetermined period is, for example, a period until the UE 100 applies new configuration information (after a change of the zone). The predetermined period is a period until the UE 100 can use a new transmission resource pool. The predetermined period may be a period during which the cell configuration information is updated (for example, the SIB (for example, the SIB 21) including the cell configuration information) is updated). The predetermined period may be a boundary modification (System Information modification boundary) in which a content of the SIB is changed. The predetermined period may be the first (or the last) SFN (System Frame Number) of the boundary modification in which the cell configuration information is updated. The predetermined period may be a fixed period (for example, 1 s) from the first (or the last) SFN of the boundary modification. The SFN may be an H-SFN (Hyper SFN). The H-SFN is broadcasted by the cell and is incremented by one when the SFN wraps around.

The UE 100 may receive the predetermined period from the eNB 200. For example, the eNB 200 may transmit information about the predetermined period to the UE 100 by dedicated signaling (such as an RRC reconfiguration message and DCI) and/or broadcast signaling (such as SIB (SIB 21 and the like)). The information about the predetermined period may be pre-configured in the UE 100. The predetermined period may be a value determined in advance.

In the predetermined period, the UE 100 may perform measurement (sensing) of a radio signal in a new transmission resource pool associated with a newly identified zone (changed zone). As a result, an occurrence of communication delay due to the measurement of the radio signal can be suppressed.

The UE 100 may omit the process of step S420.

If a predetermined time has not elapsed, the UE 100 executes a process of step S430. If the predetermined time has elapsed, the UE 100 executes a process of step S440.

In step S430, the UE 100 exceptionally selects a transmission resource pool. Specifically, the UE 100 can select a transmission resource pool that is not associated with the changed zone.

The UE 100 may, for example, select a special transmission resource pool that is not associated with a zone. The special transmission resource pool may be a resource pool for sidelink communication (D2D communication) that can be used without performing sensing. The special transmission resource pool may be a resource pool for V2X (V2V) communication not associated with the zone.

The UE 100 may exceptionally select the transmission resource pool before the change. The UE 100 may select the transmission resource pool associated with the zone before the change.

In step S440, the UE 100 selects a transmission resource pool associated with the identified zone.

In step S450, the UE 100 uses a resource in the selected transmission resource pool to transmit transmission data. The operations in steps S440 and S450 are similar to the operations described in the operation pattern 1.

As described above, even if the zone has changed, the UE 100 can exceptionally select the transmission resource pool. As a result, even if the zone (or the configuration information) has changed, the UE 100 is not required to use only the transmission resource pool associated with the changed zone. The UE 100 can, after the end of the predetermined period, use the new transmission resource pool without delay, by performing sensing in the predetermined period during which the use of the special transmission resource pool is permitted.

The UE 100 may select (use) the transmission resource pool associated with the changed zone, even before the predetermined period elapses. For example, the UE 100 may select (use) the transmission resource pool associated with the changed zone, if the sensing is completed before the predetermined period elapses.

### [Other Embodiments]

The contents of the present application are described according to each of the above-described embodiments, but it should not be understood that the discussion and the drawings constituting a part of this disclosure limit the contents of the present application. From this disclosure, various alternative embodiments, examples, and operational technologies will become apparent to those skilled in the art.

In the description above, a transmitting UE is described as an example, however, this is not limiting. A receiving UE attempting to receive transmission data in device-to-device communication may also execute a similar operation to the transmitting UE. The receiving UE may execute monitoring in (at least a part of) all selectable (transmission) resource pools. As a result, the receiving UE can receive a radio signal from the transmitting UE.

In the description above, examples of the transmission and/or reception of a direct radio signal between UEs (direct signaling) include V2V communication, and V2X communication, however, this is not limiting. The sidelink (proximity-based service) may be utilized for signaling of a direct radio signal between UEs. For example, the above-described operation may be executed in transmission/reception of a direct radio signal such as a Discovery signal (message) and PC5 signaling.

The above-described operation may be executed in another communication using a radio resource associated with the zone. The above-described operation may be performed, if the UE 100 selects a radio resource region (radio resource) associated with the zone in which the UE 100 is located (to which the UE 100 belongs). For example, the above-described operation may be applied to V2X communication (V2X communication utilizing Uu communication) via the eNB without passing through the core network. The operation described above may be applied in cellular communication (WWAN (Wireless Wide Area Network) communication).

The operation (each operation pattern) according to the above-described embodiments may be combined to be executed, where appropriate. In each of the above-described sequences, all of the operations may not be necessarily essential. For example, in each sequence, only some of the operations may be executed.

Although not particularly mentioned in each of the above-described embodiments, a program for causing a computer to execute each process performed by any one of the above-described nodes (such as the UE 100 and the eNB 200) may be provided. The program may be recorded on a computer-readable medium. If the computer-readable medium is used, it is possible to install the program on a computer. The computer-readable medium recording therein the program may be a non-transitory recording medium. The non-transitory recording medium may include, but not be limited to, a recording medium such as a CD-ROM and a DVD-ROM.

A chip may be provided which is configured by: a memory for storing a program for performing each process performed by any one of the UE 100 and the eNB 200; and a processor for executing the program stored in the memory.

In the above-described embodiments, an LTE system is described as an example of the mobile communication system; however, the LTE system is not an exclusive example, and the content according to the present application may be applied to a system other than the LTE system.

The entire content of Japanese Patent Application No. 2016-158418 (filed on August 12, 2016) is incorporated in the present specification by reference.

## Claims

1. A communication device, comprising:
a receiver configured to receive a first message from a first cell; and
a controller configured to determine, based on the first message, which of first configuration information and second configuration information to apply to calculate a zone that is a geographical section, wherein
the first configuration information is information pre-configured in the communication device,
the second configuration information is information provided from the first cell, and
the controller is configured to:
calculate a zone in which the communication device is located based on one piece of configuration information determined from the first configuration information and the second configuration information; and
perform Vehicle-to-Everything (V2X) communication based on a resource pool associated with the calculated zone.

2. The communication device according to claim 1, wherein the first message includes resource information indicating the resource pool, and
the controller is configured to perform the V2X communication based on the resource pool indicated by the resource information.

3. The communication device according to claim 1, wherein the second configuration information includes information used for the V2X communication in a second cell adjacent to the first cell, and
the controller is configured to perform the V2X communication based on the information.

4. The communication device according to claim 1, wherein the controller is configured to perform the V2X communication using an exceptional resource pool that is not associated with the zone, in accordance with a change of configuration information to be applied to the communication device.

5. A processor for controlling a communication device, the processor executing:
a process of receiving a first message from a first cell; and
a process of determining, based on the first message, which of first configuration information and second configuration information to apply to calculate a zone that is a geographical section, wherein
the first configuration information is information pre-configured in the communication device, and
the second configuration information is information provided from the first cell, wherein
the processor further executes:
a process of calculating a zone in which the communication device is located based on one piece of configuration information determined from the first configuration information and the second configuration information; and
a process of performing Vehicle-to-Everything (V2X) communication based on a resource pool associated with the calculated zone.
